Europäisches Patentamt

European Patent Office

Office européen des brevets

(11) Veröffentlichungsnummer: **0 359 343**

**A1**

## (12) EUROPÄISCHE PATENTANMELDUNG

(21) Anmeldenummer: 89202382.1

(51) Int. Cl.5: **B60V 1/14**

(22) Anmeldetag: 06.09.89

(30) Priorität: 09.09.88 DE 3830689

(43) Veröffentlichungstag der Anmeldung:
**21.03.90 Patentblatt 90/12**

(84) Benannte Vertragsstaaten:
**ES GR**

(71) Anmelder: **KÖNIG MASCHINENBAU GmbH**
**Industriestrasse 3**
**D-6470 Büdingen(DE)**

(72) Erfinder: **Stiegler, Hartmut**
**Arnoldistr. 7**
**D-6348 Herborn(DE)**

(74) Vertreter: **Munderich, Paul, Dipl.-Ing.**
**Frankfurter Strasse 84**
**D-6466 Gründau-Rothenbergen(DE)**

(54) **Luftkissenfahrzeug.**

(57) Hinter dem einen Schubstrahl erzeugenden Laufrad eines Axialgebläses sind aus Steuerschaufeln (5a; 5b) und Umkehrschaufeln (6a; 6b) bestehende Schaufelpaare angeordnet, welche so verstellt werden können, daß die Steuerschaufeln (5a; 5b) in Vorschubstellung die Schubdüse bilden und bei Umkehrschub den Ausgangsquerschnitt der Schubdüse absperren. Dabei bilden die Steuerschaufeln zusammen mit den ausgeklappten Umkehrschaufeln den Schubumkehrkanal (9).

Fig. 3

# Luftkissenfahrzeug

Die Erfindung betrifft ein Luftkissenfahrzeug mit einer Hub- und Vortriebsanlage, bestehend aus einem Axialgebläse dessen Laufrad vor einem als Schubdüse ausgebildeten Kanal angeordnet ist.

Bei Luftkissenfahrzeugen wird zur Verminderung des Fortbewegungswiderstandes ein statisches Luftkissen eingesetzt, welches durch Aufbau eines Druckpolsters mittels eines Gebläses eine höhere Antriebskraft als das Gerätegewicht aufweist. Die Fortbewegung eines Luftkissenfahrzeuges kommt durch den Schub eines ausgestoßenen Luftstromes zustande. Der besondere Vorteil derartiger Fahrzeuge besteht darin,daß z. B. Boote als amphibische Fahrzeuge eingesetzt werden können.

Die Druckluft zum Betrieb eines solchen Fahrzeuges wird den Hub- und Vortriebsanlagen zugeführt und die Steuerung der Schubeinrichtung erfolgt über verstellbare Klappen und Schaufeln.

Es sind verschiedene Steuerungsvorrichtungen bekannt, mit denen eine wirkungsvolle Lenkung und gleichzeitig eine wirkungsvolle Steuerung der Vor- bzw. Rückbewegung sowie eines Schwebezustandes des Fahrzeuges erreichet werden soll.

Die DE-OS 3121 886 beschreibt eine Auf- und Vortriebsanlage eines Luftkissenfahrzeuges, bei welcher das Axialgebläse zwei Laufräder aufweist. Das eine Laufrad erzeugt mit seinem peripheren Teil die Druckluft für das Luftkissen, während das andere Laufrad die Luftströmung für die Schubdüse erzeugt. In den Seitenwänden der Schubdüse sind feststehende Schaufeln zur Luftstrahlungssteuerung angebracht und am Ausgang verstellbare Ruder zur Steuerung der Bewegungsrichtung des Luftkissenfahrzeuges angeordnet.

Mit den Rudern kann die Wirkungsrichtung des Schubstrahles und damit die Bewegungsrichtung des Luftkissenfahrzeuges geändert werden. Zum Rückwärtsmanövrieren wird durch Verstellung der Ruder der Luftstrahl aus der Schubdüse über die seitlichen Schaufeln umgelenkt. Aus der DE-OS 3121 885 ist zu entnehmen, daß die Ruder zum Absperren der Schubdüse sich unter einem stumpfen Winkel aneinanderlegen und so der Luftstrom zur Schubumkehr zu den seitlichen Schaufeln gelenkt wird.

Weil die seitlichen Schaufeln ein feststehendes Gitter bilden, bleiben diese auch bei Vorschubbetrieb nicht ohne Einfluß auf die Luftströmung, was zu Energieverlusten führt.

Zur optimalen Ausnutzung der vom Axialgebläse erzeugten Luftströmung sollte der jeweilige Strömungskanal bei jeder Steuerungslage die aerodynamisch günstigste Ausbildung haben.

Der Erfindung liegt die Aufgabe zugrunde, die Steuerschaufel am Schubdüsenende und die seitlichen Umkehrschaufeln so auszubilden und zusammen wirken zu lassen, daß mit einfachen Mitteln eine wirkungsvolle Steuerung des Luftkissenfahrzeuges gewährleistet ist.

Zur Lösung dieser Aufgabe werden die im kennzeichnenden Teil des Patentanspruches angegebenen Merkmale vorgeschlagen.

Sowohl in Vorschubstellung als auch in Umkehrschubstellung bilden die Steuerschaufeln bzw. die Umkehrschaufeln einen Teil des jeweiligen Strömungskanales, sodaß unwirksame Strömungsverluste auf ein Minimum begrenzt sind.

In der Zeichnung ist die Erfindung an einem Ausführungsbeispiel dargestellt.

Es zeigen:

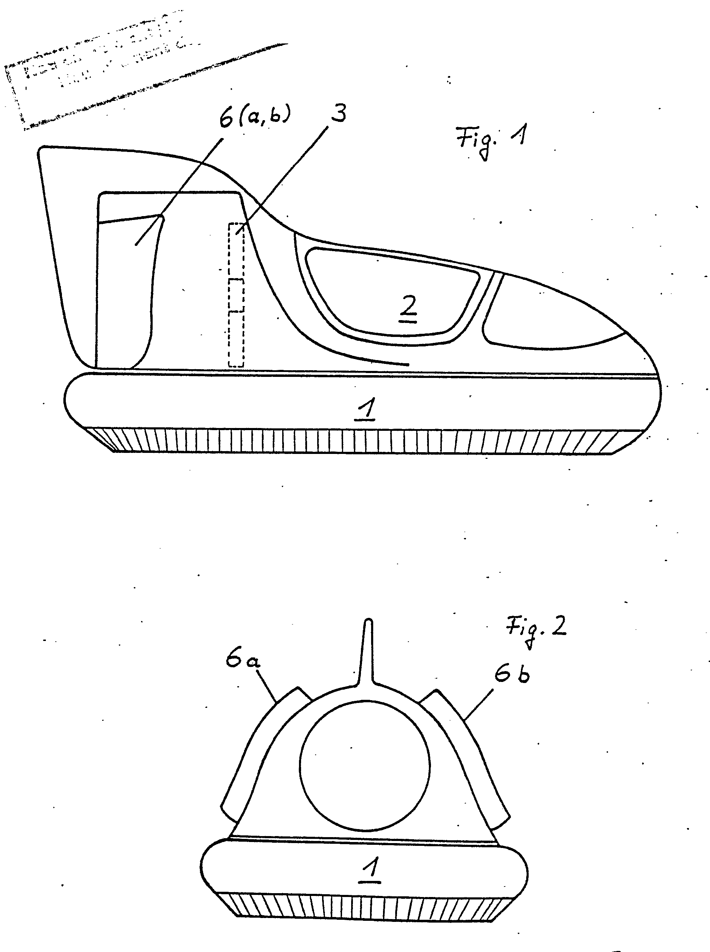

Fig. 1 ein Luftkissenboot in Seitenansicht

Fig. 2 die Ansicht von hinten

Fig. 3 + 4 die Stellung der Steuerschaufeln und Umkehrschaufeln im Vorschubbetrieb bzw. bei Schubumkehr

Fig. 5 + 6 die Stellung der Steuerschaufeln und Umkehrschaufeln beim Wendemanöver links bzw. rechts

Oberhalb des ein Luftkissen bildenden Stauraumes 1 befindet sich an der Frontseite des Luftkissenbootes der Führerstand 2 und dahinter die Hub- und Vortriebsanlage.

Die Hub- und Vortriebsanlage besteht im wesentlichen aus dem Laufrad 3 eines Axialgebläses, dessen peripherer Teil vor einem mit dem Stauraum 1 in Verbindung stehenden Kanal 4 liegt, während der innere Teil eine Luftströmung zu der nachgeordneten Schubdüse erzeugt. Über den Kanal 4 wird das erforderliche Luftkissen im Stauraum 1 aufrecht erhalten.

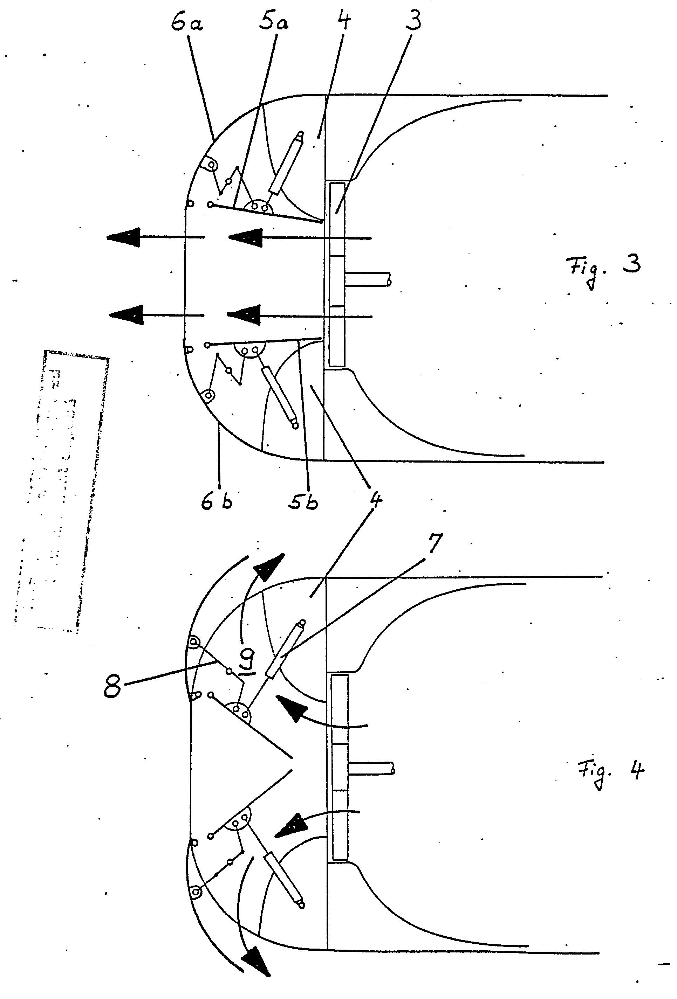

Wie Fig. 3 zeigt,wird durch die beiden Steuerschaufeln 5a und 5b in Vorschubstellung eine Schubdüse gebildet. Der vom Laufrad 3 erzeugte Luftstrom strömt nach hinten weg und gibt dem Fahrzeug den maximalen Vorschub in Fahrtrichtung.

Die einen Teil der Fahrzeugwand bildenden Umkehrschaufeln 6a und 6b sind dabei in eingefahrener Stellung.

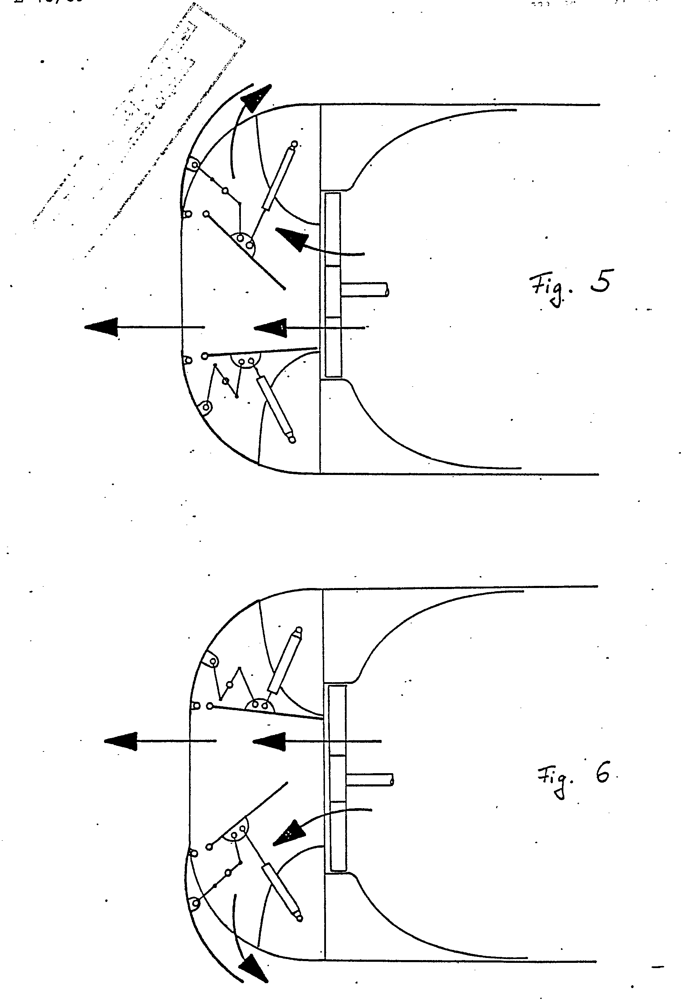

Soll die Schubrichtung umgekehrt (Rückwärtsfahrt) oder die Fahrt abgebremst werden, dann werden die Steuerschaufeln und die Umkehrschaufeln in die in Fig. 4 gezeigte Stellung gefahren. Die Verstelleinrichtung mit Antriebskolben 7 und Gestänge 8 ist nur schematisch angedeutet.

Die Druckluft strömt nunmehr über die dachförmig aneinandergefahrenen Steuerschaufeln 6a und 6b in den so gebildeten Umkehrkanal 9 und die entsprechend gekrümmten ausgefahrenen Umkehrschaufeln 6 a und 6b unter Richtungsumkehr seitlich ab und bewirkt somit einen umgekehrten Schub.

Durch das Ausfahren der Steuerschaufeln und deren Überstand über die Karosseriekontur hinaus, wirkt die von außen auf den überstehenden Teil aufprallende Luftströmung zusätzlich als Brems- bzw. Steuerkraft.

Die Steuerschaufeln 5 a und 5 b dienen auch zum Ausführen von Wendemanövern, wie die Fig. 5 und 6 verständlich machen. Je nach dem welches der Klappenpaare verstellt wird und in welchem Ausmaß die Verstellung vorgenommen wird, erfolgt eine Ablenkung eines Teiles des Luftstromes nach der Seite. Durch das dabei erzeugte Moment wird das Fahrzeug gewendet.

Mithilfe der Betätigung von zwei einfachen Klappenpaaren läßt sich das Fahrzeug wirkungsvoll steuern und es lassen sich alle gewünschten Manöver leicht ausführen.

## Ansprüche

1. Luftkissenfahrzeug mit einer Hub- und Vortriebsanlage, bestehend aus einem Axialgebläse vor einem als Schubdüse ausgebildeten Kanal, welcher mindestens zwei zueinander parallel verlaufende Steuerschaufeln sowie seitliche Umkehrschaufeln aufweist, wobei die Steuerschaufeln zur Schubumkehr den Ausgangsquerschnitt absperren, indem sie sich unter einem Winkel aneinanderlegen, dessen Spitze dem Axialgebläse zugewandt ist und dadurch den vom Axialgebläse erzeugten Luftstrom zu den seitlichen Umkehrschaufeln lenken, dadurch gekennzeichnet, daß

a) in Vorschubstellung die Steuerschaufeln (5a; 5b) Begrenzungsteil der Schubdüse sind, während die Umkehrschaufeln (6a; 6b) einen Teil der Fahrzeugwand bilden und

b) in Schubumkehrstellung die Umkehrschaufeln nach außen aufgeklappt sind und zusammen mit den dem Austrittsquerschnitt absperrenden Steuerschaufeln einen Schubumkehrkanal (9) bilden.

2. Luftkissenfahrzeug nach Anspruch 1, dadurch gekennzeichnet, daß die Steuerschaufeln (5a; 5b) mit den zugehörigen Umkehrschaufeln (6a; 6b) über ein Getriebe gekoppelt sind.

3. Luftkissenfahrzeug nach Anspruch 1 und/oder 2, dadurch gekennzeichnet, daß die axialsymmetrich zur Fahrzeugachse angeordneten linken bzw. rechten Schaufelpaare (5a-6a; 5b-6b) unabhängig voneinander betätigbar sind.

4. Luftkissenfahrzeug nach einem oder mehreren der Ansprüche 1 bis 3, dadurch gekennzeichnet, daß die Schwenkachsen der Steuerschaufeln (5a; 5b) und Umkehrschaufeln (6a; 6b) am Ende der Schubdüse angeordnet sind.

5. Luftkissenfahrzeug nach einem oder mehreren der Ansprüche 1 bis 4, dadurch gekennzeichnet, daß das Lüfterrad (3) das Axialgebläses sowohl den Querschnitt der Schubdüse als auch einen um die Schubdüse liegenden mit dem Luftkissen-Stauraum in Verbindung stehenden Ringkanal (4) mit Druckluft beaufschlagen.

6. Luftkissenfahrzeug nach einem oder mehreren der Ansprüche 1 bis 5, dadurch gekennzeichnet, daß die Steuerschaufeln (5a; 5b) in ausgefahrener Stellung über die seitliche Kontur der Fahrzeugkarosserie hinausragen.

6 (a,b)    3

Fig. 1

2

1

Fig. 2

6a          6b

1

6a  5a  4  3

Fig. 3

6b  5b  4

7

8  9

Fig. 4

Fig. 5

Fig. 6

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| Y | GB-A-2 068 310 (SECTOR HOVERCRAFT LTD) * Figur 7; Seite 3, Zeilen 45-84 * | 1 | B 60 V 1/14 |
| A | | 3,4 | |
| Y | FR-A-2 305 344 (THE BOEING CO.) * Seite 3, Zeilen 19-38 * | 1 | |
| A | --- | 2,4,6 | |
| A | US-A-4 421 489 (VAN VELDHUIZEN) * Spalte 3, Zeilen 17-30 * | 1,5 | |

|  |
|---|
| RECHERCHIERTE SACHGEBIETE (Int. Cl.5) |
| B 60 V B 64 C |

Der vorliegende Recherchenbericht wurde für alle Patentansprüche erstellt

| Recherchenort | Abschlußdatum der Recherche | Prüfer |
|---|---|---|
| DEN HAAG | 01-12-1989 | HAUGLUSTAINE H.P.M. |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus andern Gründen angeführtes Dokument

&  : Mitglied der gleichen Patentfamilie, übereinstimmendes Dokument